# NEUE EUROPÄISCHE PATENTSCHRIFT

(11) **EP 1 034 191 B2**
(45) Veröffentlichungstag und Bekanntmachung des Hinweises auf die Entscheidung über den Einspruch: **07.03.2007**
(45) Hinweis auf die Patenterteilung: 28.05.2003
(21) Anmeldenummer: 98961198.3
(22) Anmeldetag: 13.11.1998
(51) Int. Cl.: C08F 6/00

(54) **VERFAHREN ZUR HERSTELLUNG VON SYNTHETISCHEN POLYMERISATEN MIT SEHR NIEDRIGEM RESTMONOMERGEHALT, DANACH HERGESTELLTE PRODUKTE UND DEREN VERWENDUNG**
METHOD FOR PRODUCING SYNTHETIC POLYMERIZATES WITH A VERY LOW RESIDUAL MONOMER CONTENT, PRODUCTS PRODUCED ACCORDING TO THIS METHOD AND THE USE THEREOF
PROCEDE POUR PRODUIRE DES POLYMERES SYNTHETIQUES PRESENTANT UNE TRES FAIBLE TENEUR EN MONOMERES RESIDUELS, PRODUITS AINSI OBTENUS ET LEUR UTILISATION

(30) Priorität: 25.11.1997 DE 19752127
(43) Veröffentlichungstag der Anmeldung: 13.09.2000
(73) Patentinhaber: Stockhausen GmbH, 47805 Krefeld (DE)
(72) Erfinder: CHMELIR, Miroslav, D-47803 Krefeld (DE); DAHMEN, Kurt, D-41209 Mönchengladbach (DE)
(74) Vertreter: Kutzenberger, Helga
(86) Internationale Anmeldenummer: PCT/EP1998/007289
(87) Internationale Veröffentlichungsnummer: WO 1999/026987

(56) Entgegenhaltungen:
- EP-A- 0 289 338
- EP-A- 0 303 518
- EP-A- 0 505 163
- EP-A- 0 574 260
- WO-A-95/11932
- DE-A- 3 724 709
- DE-A- 3 843 780
- DE-A- 19 529 348
- JP-A- 2 242 809
- US-A- 4 132 844
- US-A- 4 766 173
- US-A- 5 219 969
- US-A- 5 629 377
- Modern Superabsorbent Polymer Technology,Wiley-VCH, ISBN 0-471-19411-5, Seite 84

## Beschreibung

Die Erfindung betrifft ein Verfahren zur Herstellung synthetischer Polymerisate auf Basis der Acrylsäure und ihrer Derivate mit sehr niedrigem Restmonomer gehalt. Die Polymerisate weisen ein hohes Molekulargewicht auf und sind entweder wasserlöslich oder besitzen ein hohes Aufnahmevermögen für Wasser, wäßrige Lösungen und Körperflüssigkeiten

Verschiedene synthetische Polymerisate, die ein Absorptionsvermögen für Wasser und Körperflüssigkeiten aufweisen, sind in zahlreichen Patenten beschrieben: z.B. vernetzte Polymere und Copolymere auf Acryl- oder Methacrylsäurebasis (US 4,018,951, US 4,066,583, US 4,062,817, US 4,066,583, DE-OS 26 13 135, DE 2 712 043, DE 2 813 634) oder Acrylamidopropansulfonsäurecopolymerisate (DE 31 24 008). Diese Absorptionsmittel sind praktisch wasserunlöslich und absorbieren im Gleichgewicht das Vielfache ihres Gewichts an Wasser, Urin oder anderen wäßrigen Lösungen. Neben dem hohen Aufnahmevermögen werden auch weitere Eigenschaften der synthetischen Absorptionsmittel wie z.B. niedriger Restmonomergehalt, niedriger Anteil an wasserlöslichen Anteilen und hohe Gelfestigkeit der gequollenen Polymerpartikel in einigen Patentschriften erwähnt.

Bei der Herstellung von hochmolekularen wasserlöslichen oder wasserquellbaren, d.h. teilvernetzten Polymerisaten und Mischpolymerisaten zeigt sich, daß eine vollständige Umwandlung der Monomeren - vor allem der Monomeren auf Acrylsäurebasis - nicht möglich ist. Im technischen Maßstab werden üblicherweise Restmonomergehalte von 0,1 bis 0,5 Gew% im Polymerisat beobachtet.

Die Toxizität der im Polymerisat verbleibenden Monomeren ist allgemein bekannt, es wäre daher ein Verfahren zur Herstellung von Polymerisaten und Mischpolymerisaten, die praktisch monomerfrei sind, sehr zweckmäßig. Da es bisher nicht möglich war, ein Polymerisationsvertahren so zu führen, daß praktisch keine Restmonomeren mehr verbleiben, wurde bisher versucht, die toxischen Restmonomeren durch Umwandlung in ihre unschädliche Derivate aus dem Polymerisat zu entfernen. So wurden in den DE-AS 1 070 377 und US 2,960,486 die wäßrigen Lösungen von hochmolekularen Acrylamidpolymerisaten mit Natriumdisulfitlösung vermischt und bei 80 bis 120°C getrocknet. Diese Verfahren setzen eine Verarbeitung des Polymerisats in sehr verdünnter (2 bis 3%iger) Polymerlösung voraus, was unwirtschaftlich ist, und daher wurden diese Methoden in der Praxis kaum angewandt.

Die Behandlung von Polymergel mit wäßriger Lösung von Natriumbisulfit oder- metabisulfit wurde in der US 3,755,280 und miteinem festen Alkalisulfit in der EP 175 554 beschrieben, wobei Restmonomergehalte von 0,03 bis 0,3 Gew% erhalten wurden. Zum gleichen Zweck wurden in der JP-PS 56/103207 ebenfalls Bisulfite, Sulfite und Pyrosulfite verwendet. Gasfömiges Schwefeldioxid wurde zur Herabsetzung der Acrylamidkonzentration in einem Emulsionspolymerisat in der US 3,780,006 benutzt. In der EP 505 163 wurden Polymerisate nach der beendeten Polymerisation mit einer Kombination von Metabisulfit und oberflächenaktiven Substanz (HLB von 3 bis 40) behandelt, wodurch Restmonomergehalte bis zu 10 ppm gesenkt werden. Für diese Nachbehandlung der Polymergele wurden 2 bis 5 Gew% Metabisulfit (bez. auf das Polymergel mit 40 % wS, d.h. 5 bis 12,5 Gew% Metabisulfit bez. auf das trokkene Polymerisat) notwendig um die gewünschte Restmonomersenkung zu erreichen. Diese hohen Mengen an Zusatzstoffen können sich sehr negativ auf die anwendungstechnischen Eigenschaften auswirken.

EP 303 518 A2 beschreibt Verfahren zur Herstellung von absorbierenden Polymeren auf Basis von Acrylsäure/Acrylamid, bei dem erfindungsgemäß ein hoher Neutralisationsgrad von 70 bis 100 Mol%, eine hohe Monomerkonzentrationen von mindestens 50% und eine Kombination aus thermisch zerfallenden Azo- und Redox-Initiatoren eingesetzt wird. Durch diese Bedingungen verläuft die Reaktion in der Weise, daß bereits während der Polymerisation alles Ansatzwasser verdampft, so daß eine nachfolgende Trocknung unterbleiben kann und die Restmonomergehalte unter 500 ppm, bevorzugt unter 200 ppm absinken sollen. Restmonomergehalte der Beispielsversuche sind nicht angegeben.

In der DE 37 24 709 A1 wird ein Verfahren zur Herstellung von Polymerisaten mit niedrigem Restmonomergehalt beschrieben, bei dem die Polymerisate nach ihrer Herstellung in gequollener Form als Gel oder in Lösung mit Verbindungen umgesetzt werden, die mit den Doppelbindungen der Restmonomeren bei 50 bis 150°C reagieren.

In der US 4,766,173 erfolgt die Reduzierung von Acrylsäure-Restmonomer in Polymerisaten durch die nachträgliche Behandlung der Polymerisate mit Aminosäuren vom Typ Lysin und Cystein bei Temperaturen ab 80°C.

WO 94/20547 beschreibt Zusätze wie Bromat und Chlorat zur Polymerisationslösung und eine nachfolgende Erhitzung des fertigen Polymers, bei dem durch die Zusätze u.a. eine Reduzierung des Restmonomers erfolgt. Die Zugabe der Bromate und Chlorate kann auch nach der Polymerisation erfolgen. Trotz dieser Maßnahmen liegt der Restmonomergehalt der Polymerisate zwischen etwa 135 und 1100 ppm.

Die vorstehend beschriebenen Verfahren des Standes der Technik ermöglichen zwar eine erhebliche Reduzierung der Restmonomeren, sind jedoch mit einigen Nachteilen verbunden, wie die Geruchsbelästigung durch frei werdendes Schwefeldioxid, Korrosion der Anlage durch Schwefeloxidfolgeprodukte (z.B. schweflige Säure und Schwefelsäure sowie deren Salze im sauren Medium). Vor allem aber ist jede Nachbehandlung des fertig hergestellten Polymerisats ein zusätzlicher technologischer Schritt, der weitere Apparate bzw. Geräte und nicht unerheblichen Zeitaufwand verlangt, wobei auch die nicht unerhebliche Menge an Zusatzstoff im Endprodukt verbleibt und anwendungstechnische Eigenschaften negativ beeinflussen kann.

Die Aufgabe der Erfindung ist es daher, die als Flockungs- oder Absorptionsmittel oder zu anderen Zwecken eingesetzten synthetischen Polymerisate von an sich bekannter chemischer Zusammensetzung mit hohem Molekulargewicht oder hohem Rückhaltevermögen für Wasser, wäßrige Flüssigkeiten und Körperflüssigkeiten unter bestimmten spezifischen Bedingungen herzustellen, um Endprodukte mit extrem niedrigem Restmonomergehalt und guten anwendungstechnische Eigenschaften zu erhalten, ohne daß eine Nachbehandlung der hergestellten Polymergele mit weiteren chemischen Verbindungen notwendig wäre.

Es wurde nun überraschenderweise gefunden, daß synthetische Polymerisate auf Acrylsäurebasis mit gewünschten Eigenschaften und extrem niedrigem Restmonomergehalt durch radikalische Polymerisation in wäßriger Lösung hergestellt werden können, wenn beim Ansetzen der zu polymerisierenden Monomermischung das Salz mindestens einer Stickstoffverbindung in eines Konzentration von 2 bis 35,0 Gew.-%, bezogen auf die Monomerlösung verwendet wird und nachträglich eine Erwärmung der Polymerisate bei 120 bis 240°C, bevorzugt bei 140 bis 180°C stattfindet, wobei als Stickstoffverbindung Salze von Ammoniak, Hydroxylamin, Alkanolaminen oder Alkylaminen bzw. desen Gemische verwendet werden. Die Polymerisate nach dem erfindungsgemäßen Verfahren weisen einen äußerst niedrigen Gehalt an Restmonomeren auf, der vorzugsweise unter 50 ppm, insbesondere unter 30 ppm liegt. Von besonderer Bedeutung ist die Tatsache, daß das als toxikologisch bedenklich eingestufte Acrylamid auf einen Restgehalt von unter 10 ppm abgesenkt werden kann.

Als geeignete Salze von Stickstoffverbindungen können vor allem die Salze von Ammoniak, von Hydroxylamin, von aliphatischen Mono- und Polyaminen, insbesondere von aliphatischen C₁-C₁₀-Aminen, von cycloaliphatischen Mono- und Polyaminen, insbesondere von cycloaliphatischen C₆ bis C₁₂-Aminen, und von Alkanolaminen sowie deren Mischungen verwendet werden. Insbesondere werden die Salze von Ammoniak, Monoethanolamin und Diethanolamin bevorzugt verwendet.

Als salzbildende saure Komponente der erfindungsgemäß einzusetzenden Aminsalze sind anorganische und organische Säuren geeignet. Insbesondere bilden als anorganische Säuren Fluß-, Salz-, Brom- und Jodwasserstoffsäure, Schwefelsäure, schweflige Säure, Sulfoxylsäure, Ortho-Phosphorsäure, phosphorige Säure, Salpetersäure, salpetrige Säure das Gegenion. Organische Säuren können sich von aliphatischen, aromatischen und gemischt aliphatisch/aromatischen Verbindungen ableiten. Sie enthalten vorzugsweise die Carboxylgruppe und/oder Säurefunktionen die vom Schwefel bzw. Phosphor gebildet werden, wobei auch mehrere Säuregruppen im Molekül vorhanden sein können. Auch die Anhydride der Säuren können eingesetzt werden. Beispielhaft seien aus der Gruppe der aromatischen Säuren Benzoesäure, Phthalsäuren, o,-, m-bzw. p-Toluolsulfonsäure, Toluolsulfinsäure, Styrolsulfonsäure, 2-hydroxy-2-phenyl-äthan-1-sulfonsäure und aus der Gruppe der aliphatischen Säuren Ameisen-, Essig-, Propion-, Butter-, Hydroxypropion, (Meth)acryl, Vinylessig-, Croton-, Malein-, Fumar-, Acrylamidopropansulfon-, Milch-, Oxal-, Malon-, Bernstein-, Wein-, Glutar- und Asparaginsäure genannt.
Die erfindungsgemäßen Aminsalze können auch Mischungen aus Aminsalzen mit verschiedenen, der vorgenannten Säuregegenionen sein

Die Anwendungskonzentration der Salze der Stickstoffverbindungen bezogen auf die Monomerlösung liegt vorzugsweise in dem Bereich zwischen 5 bis 20 Gew. %.

Um eine wirtschaftliche Herstellung der Polymerisate zu erreichen, wird die Polymerisation mit solchen Initiatoren durchgeführt, die bei relativ niedrigen Temperaturen zerfallen. Als übliche Initiatoren werden anorganische oder organische Peroxide oder Redoxsysteme verwendet. Bei der Polymerisation in wäßriger Phase werden anorganische Peroxide wie Peroxidisulfate alleine oder in Verbindung mit einer reduzierenden Komponente häufig benutzt.

Die Polymerisation kann mit einem Redox-Initiatorsystem oder durch Photopolymerisation gestartet werden. Das Redox-Initiatorsystem besteht meistens aus zwei Komponenten, einer anorganischen oder organischen peroxidhaltigen Verbindung und einer reduzierenden Komponente, wie z.B. Sulfit, Hydrosulfit, Thiosulfat, Sulfinsäure, Ascorbinsäure und ihre Salze, Kupfer-, Eisen(II)- oder Mangansalze. Als anorganische Peroxidverbindungen können die Alkalimetall- oder Ammoniumperoxide, wie z.B. Kaliumperoxidisulfat, Wasserstoffperoxid oder organische Peroxide wie z.B. Benzoylperoxid, Butylhydroperoxid verwendet werden. Meistens wird die Polymerisation mit einem Redox-Initiatorsystem gestartet. Zusätzlich zu diesem Initiatorsystem können noch weitere Initiatoren verwendet werden. Für die Photopolymerisation, die durch das UV-haltige Licht iniziiert werden kann, werden sog. Photoinitiatoren wie z.B. Benzoin oder Benzoinderivate, wie Benzoinether, Benzil und seine Derivate, wie z.B. Benzilketale, Acryldiazoniumsalze, Azoinitiatoren wie z.B. 2,2'-Azobis(iso-butyro)nitril, 2,2'-Azobis(2-amidinopropan)-hydrochlorid oder Acetophenonderivate verwendet. Die Mengen an der peroxidhaltigen Komponente und an der reduzierenden Komponente können sich im Bereich von 0,0005 bis 0,5 Gew%, vorzugsweise von 0,001 bis 0,1 Gew% (bez. auf die Monomerlösung) und an den Photoinitiatoren im Bereich von 0,001 bis 0,1 Gew%, bevorzugt von 0,002 bis 0,05 Gew% (bez. auf die Monomerlösu ng) bewegen.

Als Monomere kommen in Frage in erster Linie Acrylsäure, Acrylamid, Methacrylsäure und Methacrylamid, die alleine zu Homopolymerisaten oder zu Mischpolymerisaten polymerisiert werden, ferner aber auch andere wasserlösliche Monomeren, wie Acrylnitril, Methacrylnitril, N,N-Dimethylacrylamid, Vinylpyridin, Vinylacetat sowie weitere wasserlösliche polymerisationsfähige Säuren und ihre Salze, insbesondere die Malein-, Fumar-, Itacon-, Vinylsulfon- oder Acrylamidomethylpropansulfonsäure; ferner hydroxygruppenhaltige Ester polymerisationsfähiger Säuren, insbesondere die Hydroxyethyl- und hydroxypropylester der Acryl- und der Methacrylsäure verwendet werden können; weiter aminogruppenhaltige und ammoniumgruppenhaltige Ester und Amide polymerisationsfähiger Säuren wie die Dialkylaminoester, insbesondere die Dimethyl- und die Diethylaminoalkylester der Acryl- und der Methacrylsäure, sowie die Trimethyl- und Trimethylammoniumalkylester sowie die entsprechenden Amide. Die vorstehenden Monomeren können allein zu Homopolymerisaten oder untereinander gemischt zu Mischpolymerisaten polymerisiert werden in geringen Mengen können noch zusätzlich wasserunlösliche Monomere mit den vorstehenden Monomeren copolymerisiert werden wie die Ester der Acryl- und/oder Methacrylsäure mit C₁-C₁₀-Alkoholen, Styrol und alkylierte Styrole. Im allgemeinen liegt der Anteil an den wasserlöslichen Monomeren bei 60 bis 100 Gew%, bezogen auf die Gesamtheit der Monomeren. Die wasserunlöslichen (hydrophoben) Monomeren machen in der Regel 0 bis 40 Gew% der Monomeren aus.

Die sauren Monomerbestandteile können vor der Polymerisation neutralisiert werden, wobei der Neutralisationsgrad bevorzugt zwischen 10 und 100 Mol% liegt, insbesondere zwischen 50 und 90 Mol%. Als Basen kommen für die Neutralisation alle gängigen anorganischen und organischen Verbindungen in Betracht, insbesondere werden bevorzugt Natronlauge, Kalilauge, Ammoniak (Ammoniumhydroxid), Alkanolamine und Alkylamine sowie deren Gemische. Auch die Verwendung von Basen mehrwertiger Metallionen, wie beispielsweise Calciumhydroxid, ist in einem gewissen Rahmen möglich, wobei allerdings zu beachten ist, daß wichtige Polymereigenschaften wie die Löslichkeit oder das Absorptionsvermögen nicht ungewollt verändert werden.

Zusammen mit den o.g. Monomeren können noch in geringen Anteilen vernetzende Monomere wie z.B. Monomere mit mehr als einer reaktionsfähiger Gruppe im Molekül polymerisiert werden. Dabei entstehen teilvernetzte Polymerisate, die nicht mehr in Wasser löslich sondern nur quellbar sind. Als vernetzende Monomere seien bi- öder mehrtunktionelle Monomere, z. B. Amide wie das Methylenbisacryl- bzw. -methacrylamid oder Ethylenbisacrylamid, ferner Ester von Polyolen und alkoxylierten Polyolen, wie Diacrylate oder Triacrylate z.B. Butandiol- oder Ethylenglykoldiacrylat, Polyglykol-di-(meth)acrylate, Trimethylolpropantriacrylat, Di- und Triacrylatester des, vorzugsweise mit 1 bis 30 Mol Alkylenoxid oxalkylierten (ethoxylierten) Trimethylolpropans, Acrylat- und Methacrylatester von Glycerin und Pentaerythrit, sowie des mit vorzugsweise 1 bis 30 Mol Ethylenoxid oxethylierten Glycerins und Pentaerythrits, ferner Allylverbindungen wie Allyl(meth)acrylat, alkoxyliertes Allyl(meth)acrylat mit vorzugsweise 1 bis 30 Mol Ethylenoxid umgesetzt, Triallylcyanurat, Maleinsäurediallylester, Polyallylester, Tetraallyloxiethan, Triallylamin, Tetraallylethylendiamin, Allylester der Phosphorsäure bzw. phosphorigen Säure, ferner vernetzungsfähige Monomere, wie die N-Methylolverbindungen von Amiden wie dem Methacrylamid bzw. Acrylamid und die davon abgeleiteten Äther. Der Anteil an den vernetzenden Comonomeren liegt bei 0 bis 10 Gew%, bevorzugt bei 0,01 bis 3,0 Gew%, bezogen auf die Gesamtheit der Monomeren.

Die wasserabsorbierenden polymeren Absorptionsmittel werden unter Verwendung von mindestens einem Vernetzer erhalten. Als Vernetzer werden solche Verbindungen verwendet, die mindestens 2 oder mehr funktionelle Gruppen (Doppelbindungen, Epoxygruppen) enthalten und in der Lage sind, sich während der Polymerisation in die wachsenden Polymerketten einzubauen. Damit entstehen im Polymerisat an verschiedenen Stellen Vernetzungspunkte, die die einzelnen Polymerketten zusammenhalten und bewirken, daß in einer Flüssigkeit die Polymerpartikel nur quellen können und sich nicht in der Flüssigkeit auflösen. Durch die chemische Struktur des Vernetzers, die Anzahl der Vernetzungsstellen, aber auch durch ihre Verteilung in den Polymerketten werden die Eigenschaften des vernetzten Polymeren bestimmt. Bei optimalem Einbau des Vernetzers in das Polymerisat entstehen vernetzte Polymerisate, die die Vernetzungsstellen gleichmäßig verteilt haben, so daß kaum nichtvernetzte Regionen oder sogar unvemetzte (d.h. wasserlösliche) niedermolekulare Anteile im Polymerisat vorhanden sind. Eine gleichmäßige Verteilung der Vernetzungsstellen im Polymerisat führt zu einem Produkt, daß auch ein optimales Rückhaltevermögen für wäßrige Flüssigkeiten, sowie eine optimale Gelfestigkeit im gequollenen Zustand aufweist.

Die Polymerisation wird bevorzugt in wäßriger Lösung diskontinuierlich in einem Polymerisationsgefäß oder kontinuierlich auf einem endlosen Band, z.B. gemäß DE 35 44 770, durchgeführt. Bei einem praktisch adiabatischen Verlauf der Polymerisation entsteht bei entsprechender Anfangskonzentration von 15 bis 50 Gew% der Monomeren ein wäßriges Polymergel. Durch die Wahl der Anfangsmonomerkonzentration und der entsprechenden niedrigen Starttemperatur im Temperaturbereich von 0 bis 50 °C, bevorzugt von 5 bis 25 °C, kann die Polymerisation so geführt werden, daß die Maximaltemperatur im entstehenden wäßrigen Polymergel gut beherrschbar ist.
Das hergestellte Polymerisat wird nach dem erfindungsgemäßen Verfahren bei einer Temperatur von 120 - 240°C, bevorzugt bei 140 - 180°C erwärmt, um den niedrigen Restmonomergehalt zu erzielen. Dabei ist zu beachten, daß nicht durch eine übermäßig hohe Temperatur oder Zeit andere, wesentliche Produkteigenschaften des Polymerisates geschädigt werden. Der optimale Zeitbedarf für die Erwärmung hängt von der Konzentration der Stickstoffverbindung und der Höhe der Temperatur ab und kann mit wenigen Versuchen ermittelt werden. In den meisten Fällen ist ein Zeitraum zwischen 10 Minuten und 2 Stunden ausreichend, bevorzugt zwischen 10 Min. und 1 Stunde.

Die Polymerisate werden in die für die verschiedenen Anwendungen erforderlichen Siebfraktionen aufgeteilt. Beispielsweise sind für die Anwendung von vernetzten Polymerisaten als Absorber im Hygienebereich Kornverteilungen von 0,2 bis 1 mm bevorzugt, im Agrarbereich werden bevorzugt Produkte im Bereich 0,2 bis 3 mm und für die löslichen Polymere im Flokkungsmittelbereich bevorzugt Produkte im Bereich von 0, 1 bis 1,2 mm angewandt.

Der niedrige Restmonomergehalt bringt den erfindungsgemäßen Polymerisaten gegenüber den bekannten und nach dem Stand der Technik hergestellten Polymeren folgende Vorteile:
1. Die Polymerisate können zur Herstellung von solchen Absorptionsmaterialien verwendet werden, bei welchen ein extrem niedriger Restmonomergehalt aus toxikologischen Gründen, wie z.B. bei den Superabsorptionsmitteln für Hygieneindustrie (Windeln, Inkontinenzprodukte), Lebensmittelindustrie (Verpackungen), bei Bodenverbesserungsmitteln usw., verlangt wird.
2. Die Polymerisate können auch zur gesteuerten Abgabe der in das Polymerisat nachträglich eingebundenen oder im Polymerisat enthaltenen weiteren Substanzen an andere Körper, wie z.B. beim Dosieren von Arzneimitteln in der Humanmedizin, beim Dosieren der Nährstoffe (Düngemitteleffekt) an Pflanzen, Insektizidmitteln und Herbiziden in wäßrigem Medium, bevorzugt auf großen Wasserflächen, verwendet werden, ohne daß größere Mengen an toxikologisch bedenklichen Restmonomeren in die Umwelt gelangen.
3. unvernetzte, wasserlösliche Polymerisate mit niedrigem Restmonomergehalt können auch für solche Anwendungen eingesetzt werden, wo aus toxikologischen Gründen extrem niedrige Restmonomergehalte verlangt werden, wie bei Trinkwasseraufbereitung, bei der Verwendung als Verdikkungsmittel in der Lebensmittelindustrie, Dosieren von Arzneimitteln usw.

Die Einbindung von Nährstoffen für Pflanzen, Herbiziden, Insektizidmitteln, Desinfektionsmitteln, Arzneimitteln, antibakteriellen Mitteln, sowie von anderen Substanzen in das Polymerisat kann durch Zusatz dieser Verbindungen direkt zur Monomerlösung erfolgen, wenn der Polymerisationsverlauf dadurch nicht gestört wird. Wenn aber diese Substanzen die Polymerisation beeinflussen, dann muß ihre Einbindung erst während der Polymerisation oder nach der beendeten Polymerisation durch eine Einarbeitung von diesen Substanzen in das bereits hergestellte Polymergel z.B. nach den DE 40 29 591, DE 40 29 592 oder DE 40 29 593 erfolgen.

### Beispiele

### Bestimmung des Aufnahmevermögens

In ein 250 ml Becherglas mit 200 ml Fertilizer-Lösung* wird unter Rühren 1 g Polymer gegeben. Nach einer Rührzeit von 15 Minuten wird der Magnetrührer abgestellt und 45 Minuten stehengelassen. Der Inhalt des Becherglases wird sodann über ein Sieb mit der Maschenweite 0,3 mm geschüttet, wobei das durch die Fertilizer-Lösung gequollene Polymer auf dem Sieb verbleibt. Aus der Differenz zwischen der ursprünglich eingesetzten Lösungsmenge von 200 ml und der Menge an Lösung, die das Sieb passiert hat, errechnet man die durch das Polymer absorbierte Menge Fertilizer-Lösung in ml/g Polymer.
*: Peters®Professional Fertilizer, Fa. Grace-Sierra Horticultural Products Comp., Pennsylvania, USA

### Bestimmung des Restmonomergehaltes

Die Restmonomerbestandteile Acrylamid und Acrylsäure werden an wäßrigen Auszügen der Polymere durch HPLC mit internen Standards ermittelt.

### Beispiel 1

In einem Polymerisationsgefäß wurden zunächst in 230 g Wasser 146,5 g Acrylsäure, 372 g Acrylamidlösung (40 Gew.%) 6,9 g Acrylamidopropansulfonsäure und 0,9 g Methylenbisacrylamid mit 180 g Kalilauge (45 %ig) bis zu einem Neutralisationsgrad von 70 % neutralisiert. Nach Zugabe von 59,3 g Ammoniumchlorid wurde die Monomerlösung auf 10 °C gekühlt und mit Stickstoff ausgeblasen. Nach der Zugabe der Initiatorlösungen (1,0 g Natriumperoxodisulfat, 0,2 g 2,2'-Azobis(2-methylpropionamidin)dihydrochlorid in je 20 ml Wasser und 0,05 g Irgacure® 651 (Photoinitiator, Fa. Ciba-Geigy)in 2 g Acrylsäure) wurde die Polymerisation mit UV-Licht gestartet. Die Maximaltemperatur von 104 °C wurde innerhalb von 6 Minuten erreicht. Nach der beendeten Polymerisation wurde das Polymer bei 160 °C für 1,5 h erwärmt, gemahlen und auf die gewünschte Kornfraktion von 200 bis 1000 um gesiebt. Das Aufnahmevermögen betrug 74 ml/g an 0,1 %iger Fertilizer* Lösung und der Restmonomergehalt lag bei 10 ppm Acrylsäure und 5 ppm Acrylamid.

### Beispiel 2

Die Monomerlösung gemäß Beispiel 1 wurde mit 180 g Kalilauge (45 %ig) bis zu einem Neutralisationsgrad von 70 % neutralisiert. Nach Zugabe von 89 g Ammoniumchlorid wurde die Monomerlösung auf 10 °C gekühlt und mit Stickstoff ausgeblasen. Nach der Zugabe der Initiatorlösungen gemäß Beispiel 1 wurde die Polymerisation mit UV-Licht gestartet. Die Maximaltemperatur von 104 °C wurde innerhalb von 8 Minuten erreicht Nach der beendeten Polymerisation wurde das Polymer bei 160 °C für 1,5 h erwärmt und auf die gewünschte Kornfraktion gemahlen. Das Aufnahmevermögen betrug 67 ml/g an 0,1 %iger Fertilizer Lösung und der Restmonomergehalt lag bei 10 ppm Acrylsäure und 5 ppm Acrylamid.

### Beispiel 3

In einem Polymerisationsgefäß wurden 155 g Wasser mit 742 g Acrylamidlösung (40 Gew.%) vermischt. Nach der Zugabe von 0,34 g Diethylentriaminpentaessigsäure-Na-Salz (40%ig) und 59,3 g Ammoniumchlorid wurde die Monomerlösung auf 5 °C gekühlt und mit Stickstoff ausgeblasen. Nach der Zugabe der Initiatorlösungen (1,0 g Natriumperoxodisulfat, 0,2 g 2,2'-Azobis(2-methylpropionamidin)dihydrochlorid in je 20 ml Wasser und 0,05 g Irgacure® 651 (Photoinitiator, Fa. Ciba-Geigy) in 2 g Acrylsäure) wurde die Polymerisation mit UV-Licht gestartet. Die Maximaltemperatur von 102 °C wurde innerhalb von 10 Minuten erreicht. Nach derbeendeten Polymerisation wurde das Polymer bei 140 °C für 1,5 h erwärmt, gemahlen und auf die gewünschte Kornfraktion von 200 bis 1000 µm gesiebt. Der Restmonomergehalt lag bei 3 ppm Acrylsäure und 10 ppm Acrylamid.

## Patentansprüche

1. Verfahren zur Herstellung wasserlöslicher bzw. wasserquellbarer synthetischer Polymerisate durch radikalische Polymerisation von Acrylsäure und/oder Acrylsäurederivaten in wässriger Lösung, **dadurch gekennzeichnet, dass** die Polymerisate aus einer Monomerlösung entstehen, zu der mindestens eine Stickstoffverbindung vor oder während der Polymerisation in Form ihres Salzes in einer Konzentration von 2 bis 35,0 Gew.-%, bezogen auf die Monomerlösung, zugesetzt wurde, und dass nach der Polymerisation das entstandene Polymer bei einer Temperatur von 120 bis 240°C erwärmt wird, wodurch Polymerisate mit einem sehr niedrigen Restmonomergehalt erhalten werden, wobei als Stickstoffverbindung Salze von Ammoniak, Hydroxylamin, Alkanolaminen odEr Alkylaminen bzw. deren Gemische verwendet werden.

2. Verfahren nach Anspruch 1, **dadurch gekennzeichnet, dass** als Stickstoffverbindung bevorzugt Salze von Ammoniak, Mono- oder Diethanolamin bzw. deren Gemische verwendet werden.

3. Verfahren nach Anspruch 1 bis 2, **dadurch gekennzeichnet, dass** die Stickstoffverbindung in ihrer Salzform in einer Konzentration von 5 bis 20 Gew.-%, bezogen auf die Monomerlösung verwendet wird.

4. Verfahren nach Anspruch 1 bis 3, **dadurch gekennzeichnet, dass** Monomere auf Basis der Acrylsäure, Methacrylsäure oder Derivaten dieser Carbonsäuren polymerisiert werden, vorzugsweise als Homo- oder Copolymerisate der Acryl-, Methacrylsäure, Acrylamidopropansulfonsäure, den Alkali- oder Ammoniumsalzen dieser Carbonsäuren, des Acryl- oder Methacrylamids und deren Derivaten, des Vinylpyrrolidons, sowie als Copolymerisate untereinander oder mit anderen nur teilweise wasserlöslichen Monomeren wie z.B. Vinylacetat verwendet werden.

5. Verfahren nach Anspruch 1 bis 4, **dadurch gekennzeichnet, dass** zusätzlich wenigstens ein Vernetzer auf Basis eines bi- oder polyfunktionellen Monomers verwendet wird.

6. Verfahren nach Anspruch 1 bis 5, **dadurch gekennzeichnet, dass** das hergestellte Polymer bei einer Temperatur von 140 bis 180°C erwärmt wird.

7. Verfahren nach Anspruch 1 bis 6, **dadurch gekennzeichnet, dass** Polymerisate mit einem Gehalt an Restmonomer von kleiner 50 ppm, bevorzugt kleiner 30 ppm entstehen.

8. Verfahren nach Anspruch 1 bis 7, **dadurch gekennzeichnet, dass** Polymerisate mit einem Restgehalt an Acrylamid von kleiner 10 ppm entstehen.

## Claims

1. Process for preparing water-soluble or water-swellable synthetic polymers by radical polymerisation of acrylic acid and/or acrylic acid derivatives in aqueous solution, **characterised in that** the polymers are formed from a monomer solution to which at least one nitrogen compound in the form of its salt has been added in a concentration of 2 to 35.0 wt.%, based on the monomer solution, before or during the polymerisation, and **in that**, after the polymerisation, the resulting polymer is heated at a temperature of 120 to 240°C, as a result of which polymers with a very low residual monomer content are obtained, wherein salts of ammonia, hydroxylamine, alkanolamines or alkylamines or mixtures thereof are used as the nitrogen compound.

2. Process according to claim 1, **characterised in that** salts of ammonia, mono- or diethanolamine or mixtures thereof are preferably used as the nitrogen compound.

3. Process according to claims 1 to 2, **characterised in that** the nitrogen compound is used in its salt form in a concentration of from 5 to 20 wt.,%, based on the monomer solution.

4. Process according to claims 1 to 3, **characterised in that** monomers based on acrylic acid, methacrylic acid or derivatives of these carboxylic acids are polymerised, preferably as homo- or copolymers of acrylic acid, methacrylic acid, acrylamidopropanesulfonic acid, the alkali metal or ammonium salts of these carboxylic acids, of acrylamide or methacrylamide and the derivatives thereof, of vinylpyrrolidone, and are used as copolymers with one another or with other only partially water-soluble monomers such as vinyl acetate, for example.

5. Process according to claims 1 to 4, **characterised in that** at least one crosslinker based on a bi- or polyfunctional monomer is additionally used.

6. Process according to claims 1 to 5, **characterised in that** the polymer prepared is heated at a temperature of 140 to 180°C.

7. Process according to claims 1 to 6, **characterised in that** polymers with a residual monomer content of less than 50 ppm, preferably less than 30 ppm, are formed.

8. Process according to claims 1 to 7, **characterised in that** polymers with a residual acrylamide content of less than 10 ppm are formed.

## Revendications

1. Procédé de production de polymères synthétiques solubles dans l'eau ou susceptibles de gonfler dans l'eau, par polymérisation radicalaire d'acide acrylique et/ou de dérivés d'acide acrylique en solution aqueuse,
**caractérisé en ce que**
les polymères consistent en une solution monomère à laquelle on a ajouté au moins un composé azoté avant ou pendant la polymérisation sous la forme de son sel, et **en ce que**, après la polymérisation, le polymère formé est chauffé à une température de 120 à 240°C, grâce à quoi on obtient des polymères ayant une teneur très basse en monomère résiduel, en utilisant, comme composé azoté, des sels d'ammoniac, d'hydroxylamine, d'alkanolamines ou d'alkylamines ou de leurs mélanges.

2. Procédé selon la revendication 1,
**caractérisé en ce que**
comme composé azoté, on utilise de préférence des sels d'ammoniac, de mono- et diéthanolamine ou leurs mélanges.

3. Procédé selon les revendications 1 à 2,
**caractérisé en ce qu'**
on utilise le composé azoté sous sa forme de sel à une concentration de 2 à 35,0 % en poids, de préférence de 5 à 20 % en poids rapporté à la solution monomère.

4. Procédé selon les revendications 1 à 3,
**caractérisé en ce qu'**
on polymérise des monomères à base d'acide acrylique, d'acide méthacrylique, ou des dérivés de ces acides carboxyliques, et on les utilise de préférence sous forme d'homo- ou de copolymères d'acide acrylique, d'acide méthacrylique, d'acide acrylamidopropane sulfonique, des sels de métal alcalin ou d'ammonium de ces acides carboxyliques, d'amide acrylique ou méthacrylique et de leurs dérivés, de la vinylpyrrolidone, ainsi que sous forme de copolymères les uns après les autres ou avec d'autres monomères seulement partiellement solubles dans l'eau, comme par exemple l'acétate de vinyle.

5. Procédé selon les revendications 1 à 4,
**caractérisé en ce qu'**
on utilise en supplément au moins un agent réticulant à base d'un monomère bi- ou polyfonctionnel.

6. Procédé selon les revendications 1 à 5,
**caractérisé en ce qu'**
on chauffe le polymère produit à une température de 140 à 180°C.

7. Procédé selon les revendications 1 à 6,
**caractérisé en ce que**
les polymères ont une teneur en monomère résiduel inférieure à 50 ppm, de préférence inférieure à 30 ppm.

8. Procédé selon les revendications 1 à 7,
**caractérisé en ce que**
les polymères se présentent avec une teneur résiduelle en acrylamide inférieure à 10 ppm.
